# EUROPÄISCHE PATENTSCHRIFT

(11) **EP 0 524 397 B1**
(45) Veröffentlichungstag und Bekanntmachung des Hinweises auf die Patenterteilung: **22.11.1995**
(21) Anmeldenummer: 92108720.1
(22) Anmeldetag: 23.05.1992
(51) Int. Cl.: B60R 5/04

(54) **Modulares Gepäcksicherungssystem**
Modular security system for luggage
Système modulaire de sécurité de bagage

(30) Priorität: 24.07.1991 DE 4124449
(43) Veröffentlichungstag der Anmeldung: 27.01.1993
(73) Patentinhaber: Ieper Industries N.V., B-8900 Ieper (BE)
(72) Erfinder: Labeur, Lucas, B-3010 Kessel Lo (BE)
(74) Vertreter: Weber, Dieter, Dr.

(56) Entgegenhaltungen:
- EP-A- 0 258 823
- EP-A- 0 461 381
- FR-A- 2 566 722
- US-A- 4 480 675

## Beschreibung

Die Erfindung betrifft ein modulares Gepäcksicherungssystem für den Gepäckraum und/oder den Innenraum von Combi-Pkw mit einer rollo-artigen Gepäckraumabdeckung und mit seitlichen Halterungen für die Befestigung der Gepäckraumabdeckung bzw. deren Aufwickelvorrichtung. Derartige Gepäckraumabdeckungen sind seit langem bekannt (siehe zum Beispiel US-A-4 480 675). Sie finden vor allem Verwendung bei sogenannten Combi-Pkw mit Steilheck oder Schrägheck und einer großen Heckklappe. Aus Gründen der Flexibilität und um einen möglichst großen Laderaum zu haben, sind die Gepäckräume derartiger Pkw zum Fahrgastraum hin im allgemeinen offen, weisen also keine Abdeckung auf.

Dies hat jedoch den Nachteil, daß in dem Gepäckraum liegende Gegenstände von außen ohne weiteres sichtbar sind und gegebenenfalls zum Einbruch in den Wagen und zum Diebstahl der Gegenstände und/oder des gesamten Fahrzeuges verleiten können. Aus diesem Grunde sind derartige Combi-Pkw häufig mit abnehmbaren oder flexiblen Gepäckraumabdeckungen ausgerüstet, die sich leicht entfernen, zur Seite schieben, zusammenschieben oder aufrollen lassen.

Unabhängig von diesen Gepäckraumabdeckungen, welche vor allem die Sicht in den Gepäckraum verhindern, gibt es auch noch sogenannte Auto-Sicherheitsnetze, gelegentlich auch "Hundenetze" genannt, die den Gepäckraum nicht horizontal, sondern vertikal abtrennen (siehe zum Beispiel EP-A-0 258 823). Derartige Netze dienen z.B. dazu, einen Hund in dem Gepäckraum aufzunehmen, ohne daß er über die Lehne des Rücksitzes in den Fahrgastraum gelangen kann. Derartige Netze können sich entweder von der Oberkante der Rücklehne aus, gegebenenfalls aber auch vom Boden des Gepäckabteils aus nach oben erstrecken.

Die Ansprüche an derartige Combi-Pkw insbesondere hinsichtlich der Sicherheitsanforderungen werden immer größer, so daß immer vielfältigere Variationen auf den Markt kommen, bei welchen z.B. die Rückbänke derartiger Pkw umklappbar, teilbar oder in Längsrichtung des Fahrzeuges verschiebbar sind.

Die bisher bekannten Gepäckraumabdeckungen und Sicherheitsnetze sind jedoch an derartige Veränderungen des Pkw-Innenraumes nicht oder nur bedingt anpaßbar.

Der vorliegenden Erfindung liegt daher die Aufgabe zugrunde, ein modulares Gepäcksicherungssystem zu schaffen, welches in besserem Maße als die bisher bekannten Systeme den Variationsmöglichkeiten moderner Combi-Pkw angepaßt ist und sehr unterschiedliche Abtrennarten ermöglicht.

Diese Aufgabe wird erfindungsgemäß dadurch gelöst, daß die Halterung für die Wickelvorrichtung sich an den Seitenwänden im Bereich der Lehne des Rücksitzes des Fahrzeuges in dessen Längsrichtung erstreckt und in dieser Richtung beabstandet mehrere Befestigungspunkte aufweist. Wird dann beispielsweise die Rücksitzbank nach vorn oder hinten verschoben, so kann einfach die Wickelvorrichtung für eine rollo-artige Gepäckabdeckung entsprechend an andere Befestigungspunkte der Halterung versetzt werden, so daß man immer eine im wesentlichen vollständige Gepäckraumabdeckung bzw. -Abtrennung erhält.

Dabei kann es zweckmäßig sein, wenn die seitliche Halterung als Schiene ausgebildet ist und weiterhin so ausgestaltet ist, daß eine entsprechende Wickelvorrichtung in beliebiger Position entlang der Schiene befestigt werden kann. Zu diesem Zweck kann die Schiene mehrere Raststellen aufweisen. Insbesondere kann die Schiene als Profilschiene ausgebildet sein.

In der bevorzugten Ausführungsform der Erfindung sind auf jeder Seite des Fahrzeuges zwei parallele Schienen angeordnet, deren Enden miteinander verbunden sind, so daß die Schienen mit diesen Verbindungen einen geschlossenen Rahmen bilden, wobei in Längsrichtung der Schienen beabstandet mehrere Querstege vorgesehen sind, welche den Zwischenraum zwischen den Schienen in mehrere rechteckige Felder unterteilen. Dabei sind die Querstege weniger dick bzw. weniger hoch als die Schienen und deren Endverbindungen, so daß die zum Fahrzeuginneren gewandte Oberseite der Querstege gegenüber der Oberfläche der Schienen bzw. des Rahmens zurückspringt. Die zwischen den Querstegen und den Schienen gebildeten rechteckigen Felder sind vorzugsweise so bemessen, daß sie einen Stirnzapfen einer Wickelvorrichtung aufnehmen können und gegen Verdrehung sicher halten. Zum Verschieben einer Wickelvorrichtung in einer solchen Schiene braucht lediglich die Wickelvorrichtung in axialer Richtung etwas zusammengedrückt zu werden, wobei sie selbstverständlich eine entsprechende, federnd vorgespannte Konstruktion aufweist, bis die Endzapfen außer Eingriff mit den Querstegen treten, so daß der Zapfen in Längsrichtung der Schienen verschoben und in ein anderes Feld eingesetzt werden kann. Bei der Verschiebung wird der Zapfen immer noch von den Schienen geführt, da die Querstege eine geringere Höhe haben als die Schienen. Es versteht sich, daß die beiden Schienen auch als seitliche Flansche eines einstückigen Profilteiles ausgebildet sein können.

Besonders flexible Gestaltungsmöglichkeiten erhält man, wenn mehrere Wickelvorrichtungen gleichzeitig an der Halterung anbringbar bzw. angebracht sind. So kann beispielsweise an einem Befestigungspunkt (jeweils zu beiden Seiten des Fahrzeuginneren) eine nach hinten ausziehbare, rollo-artige Gepäckraumabdeckung befestigt werden und unmittelbar davor (in Fahrtrichtung gesehen) eine Wickelvorrichtung für ein Sicherheitsnetz, welches nach oben zum Dach des Fahrzeuges hin ausziehbar ist. In diesem Fall kann der Gepäckraum wahlweise mit der rollo-artigen Gepäckraumabdeckung abgedeckt oder aber lediglich durch das Sicherheitsnetz abgeteilt werden. Selbstverständlich kann man auch beide Abtrennungen gleichzeitig vornehmen. Besonders bevorzugt ist dabei eine Ausführungsform der Erfindung, bei welcher vor einem etwaigen Netz und ansonsten vor der rückwärtigen Gepäckraumabdeckung eine nach vorn ausziehbare Gepäckraumabdeckung bzw. deren Wickelvorrichtung angebracht ist. Mit dieser kann man nämlich auch den zusätzlichen Gepäckraum, den man nach vollständigem Umklappen der Rücksitzbank erhält, entsprechend abdecken.

Besonders bevorzugt ist dabei eine Ausführungsform der Erfindung, bei welcher die nach vorn ausziehbare Abdeckung in zwei unabhängig ausziehbare Bahnen aufgeteilt ist, wobei außerdem das Breitenverhältnis der Bahnen zueinander zwischen 1:1 und 2:1 liegen sollte. Dies entspricht der Aufteilung von Rücksitzbänken entweder im Verhältnis 1:1 oder 1:2 bei einigen PKW-Herstellern.

Aufgrund der Halterung mit mehreren und in Längsrichtung des Fahrzeuges beabstandeten Befestigungspunkten und aufgrund des Einsatzes unterschiedlicher Abtrenn- oder Abdeckungselemente wie den erwähnten nach vorn oder hinten ausziehbaren, gegebenenfalls geteilten Abdeckungen und den gegebenenfalls nach oben oder unten ausziehbaren Netzen, kann das modulare Gepäcksicherungssystem gemäß der vorliegenden Erfindung an die unterschiedlichsten Gegebenheiten in modernen Combi-Pkw angepaßt werden. Netze wie Abdeckungen verhindern, daß Gepäckstücke oder Tiere, die sich in dem hinteren Fahrzeugabteil befinden, bei scharfen Bremsmanövern oder bei einem Unfall in den Fahrgastraum fliegen und die darin sitzenden Personen verletzen. Die Gepäckraumabdeckungen verhindern gleichzeitig eine unerwünschte Sicht auf in dem Fahrzeug aufbewahrte Gegenstände.

Weitere Vorteile, Merkmale und Anwendungsmöglichkeiten der vorliegenden Erfindung werden deutlich anhand der folgenden Beschreibung bevorzugter Ausführungsformen und der dazugehörigen Figuren. Es zeigen:
- Figur 1: schematisch einen Combi-Pkw mit einer darin angedeuteten Befestigungsschiene, die in einem vergrößerten Ausschnitt separat dargestellt ist,
- Figur 2: die drei verschiedenen, bevorzugten Module, die an der Halterung befestigbar sind,
- Figur 3: die Anordnung dieser drei Module im Inneren eines Combi-Pkw und
- Figur 4: ein weiteres Anwendungsbeispiel für den Fall eines nach vorne geklappten Rücksitzes.

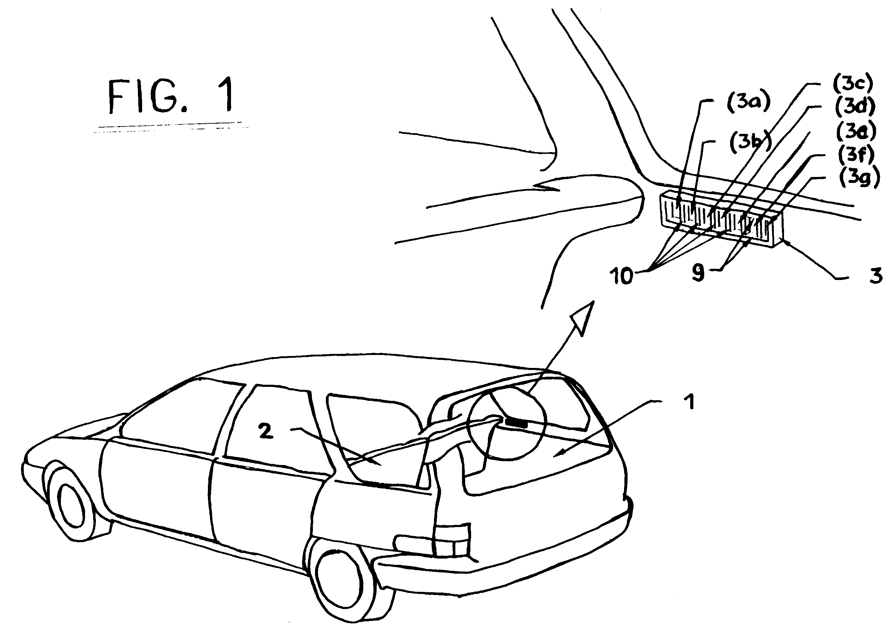

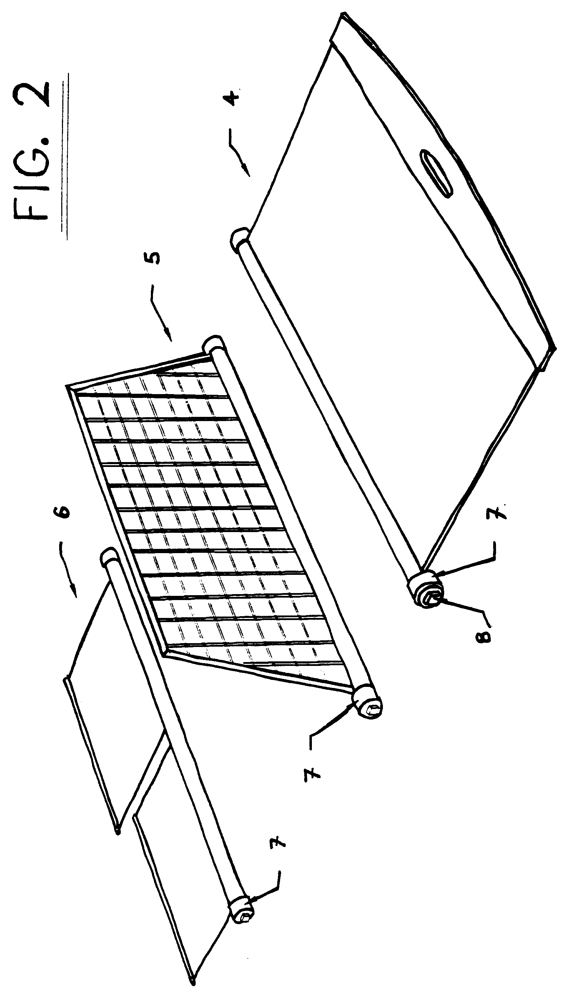

In Figur 1 erkennt man einen schematisch dargestellten Combi-Pkw, der teilweise durchsichtig dargestellt ist, um den Blick auf den hinteren innen- und Gepäckraum zu erleichtern. An der rechten Innenwand 1 in Höhe der Oberkante der Rückenlehne 2 der Rücksitzbank des Fahrzeuges erkennt man eine Halterung 3, die in dem kreisförmigen Ausschnitt aus Figur 1 nochmals vergrößert dargestellt Ist. Die Halterung in Form eines zwei Längsseiten bzw. Schienen 9 aufweisenden Rahmens wird an der Seitenwand eines Fahrzeuges befestigt und zwar vorzugsweise mit Befestigungsmitteln, die eine unterschiedliche Positionierung der Halterung in Längsrichtung, gegebenenfalls auch in Höhenrichtung erlauben. Die beiden Schienen 9 definieren einen dazwischenliegenden Schlitz, der in dem dargestellten Ausführungsbeispiel durch sieben Querstege in mehrere Felder 3a bis 3g unterteilt ist, wobei man in dem vergrößerten Ausschnitt der Figur 1 deutlich erkennt, daß die Querstege eine geringere Höhe haben als die Schienen, so daß also die Zapfen 8 der beispielhaft in Figur 2 dargestellten Wickelvorrichtung noch zwischen den Schienen 9 geführt werden können, selbst wenn sie in axialer Richtung soweit verschoben sind, daß sie mit den die Felder 3a bis 3g begrenzenden Querstegen nicht mehr in Eingriff treten. Gleichzeitig sind aber die Zapfen 8 und die Querstege so bemessen, daß nach dem Freigeben der Wickelvorrichtung in axialer Richtung dieser Zapfen in den Zwischenräumen zwischen den Querstegen verrasten und drehfest aufgenommen sind. Konkret handelt es sich bei diesen Modulen um Wickelvorrichtungen für rollo-artige Gepäckabdeckungen und Sicherheitsnetze, wie sie beispielhaft in Figur 2 dargestellt sind. Diese Wickelvorrichtungen bestehen im wesentlichen aus einer zentralen Wickelwelle, einem Gehäuse, in welchem die aufgewickelte Bahn aufgenommen wird und zwei gegenüberliegenden Endkappen, die Verbindungselemente zu den Befestigungspunkten, zum Beispiel an ihren äußersten Enden Zapfen oder dergleichen aufweisen, welche genau in Öffnungen der Befestigungspunkte 3a bis 3g hineinpassen und die Kappen bzw. das Gehäuse der Module drehfest in der Halterung 3 halten. Um das Einsetzen und Herausnehmen der Module zu erleichtern, können die Kappen in Achsrichtung der Wickelwelle federnd vorgespannt sein. Auch die Wickelwelle weist eine entsprechende federnde Vorspannung auf, um beim Loslassen des Rollos oder beim Auslösen des Wickelmechanismus die entsprechende Bahn selbsttätig aufzuwickeln. Zwischen Wickelwelle und Kappe und/oder Gehäuse können Sicherungselemente vorgesehen werden, welche ein unbeabsichtigtes Entspannen der Wickelfeder etwa beim Einsetzen oder Herausnehmen der Module aus den Halterungen 3 verhindern.

In der in Figur 1 dargestellten Situation ist angenommen, daß der Rücksitz des Fahrzeuges in Längsrichtung desselben verschiebbar ist und sich in seiner am weitesten nach vorn verschobenen Stellung befindet, in welcher die obere hintere Kante der Rücklehne 2 noch vor dem ersten Befestigungspunkt 3a liegt, so daß dort entweder eine Gepäckraumabdeckung oder ein Sicherheitsnetz befestigt werden kann. Soll der Rücksitz weiter nach hinten verschoben werden, so werden auch die Wickelvorrichtungen für die Gepäckraumabdeckung und/oder das Sicherheitsnetz entsprechend weiter zurückversetzt und an einem der Befestigungspunkte 3b bis 3e angebracht.

Es versteht sich, daß auch der linken Innenseite des Fahrzeuges spiegelbildlich genau dieselbe Halterung 3 angeordnet ist.

Bei einer anderen Ausführungsform kann die Halterung 3 auch als durchgehende Profilschiene ausgebildet sein, wobei die Module in dem entsprechenden Schienenprofil in Längsrichtung beliebig verschiebbar und an beliebigen Positionen fixierbar sein können. Gegebenenfalls kann eine solche Profilschiene auch mehrere Raststellen zum Fixieren der Module aufweisen.

Die drei in Figur 2 dargestellten Module 4, 5 und 6 haben an ihren Wickelvorrichtungen jeweils Endkappen 7 mit im Querschnitt rechteckigen, identischen Zapfen 8, welche genau in die als Befestigungspunkte dienenden Öffnungen bzw. Felder 3a bis 3g der Halterung 3 hineinpassen. Sie sind damit drehfest in der Halterung 3 aufgenommen und können so ein Widerlager für die Wickelfeder bilden.

Mit 4 ist eine hintere Gepäckraumabdeckung bezeichnet, d.h. ein aufwickelbares Rollo, welches von der oberen Hinterkante der Rücklehne 2 aus zur Heckklappe des Fahrzeuges hin gezogen werden kann. Ein solches Rollo kann z.B. Leistenverstärkungen aufweisen, so daß auch leichte Lasten auf seiner Oberseite abgelegt werden können. Für die seitlichen Kanten können im Innenraum des Fahrzeuges auch Führungen vorgesehen sein.

Das Sicherheitsnetz 5 ist nach oben ausziehbar und trennt den hinteren Gepäckraum unabhängig von der Abdeckung 4 von dem vorderen Fahrgastraum ab. Das Netz ist in etwa trapezförmig, da die Seitenwände eines Fahrzeuges nach oben schräg aufeinanderzulaufen. Wahlweise könnte ein solches Netz jedoch auch nach unten gezogen werden (und in diesem Fall konstante Breite haben).

Die Vorrichtung 6 besteht aus zwei unabhängigen Gepäckabdeckungsrollos, die jedoch nebeneinander angeordnet und um eine gemeinsame (gedachte) Achse drehbar sind.

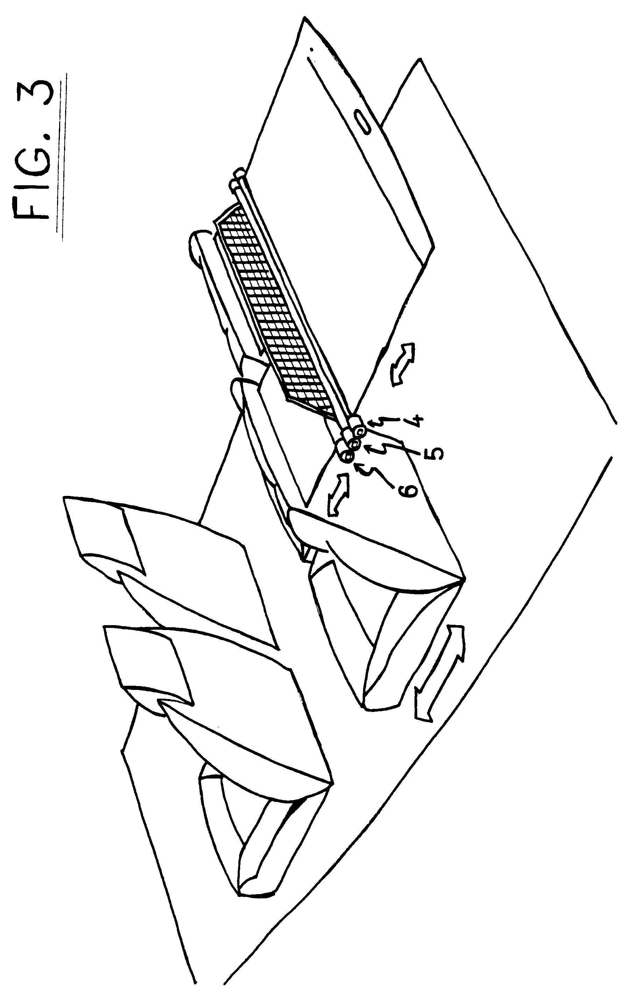

Diese Vorrichtung erweist sich als besonders zweckmäßig, wenn beispielsweise die Lehne 2 des Rücksitzes umgeklappt wird oder wenn der Rücksitz 2 weiter nach vorne gerückt werden kann, als die Halterung 3 maximal reicht (z.B. wegen des folgenden Türausschnittes). In diesem Fall können die zusätzlichen Rollos des Moduls 6 auch den Zwischenraum zwischen der Verbindungslinie der gegenüberliegenden Befestigungspunkte 3a und der Rücklehne 2 des Rücksitzes oder auch der Rücklehnen der vorderen Sitze überbrücken. Figur 3 zeigt schematisch eine solche Anordnung, bei welcher die hintere Sitzbank bzw. die hinteren Sitze entsprechend weit nach vorn verschoben sind, so daß auch der Modul 6 sinnvoll eingesetzt werden kann.

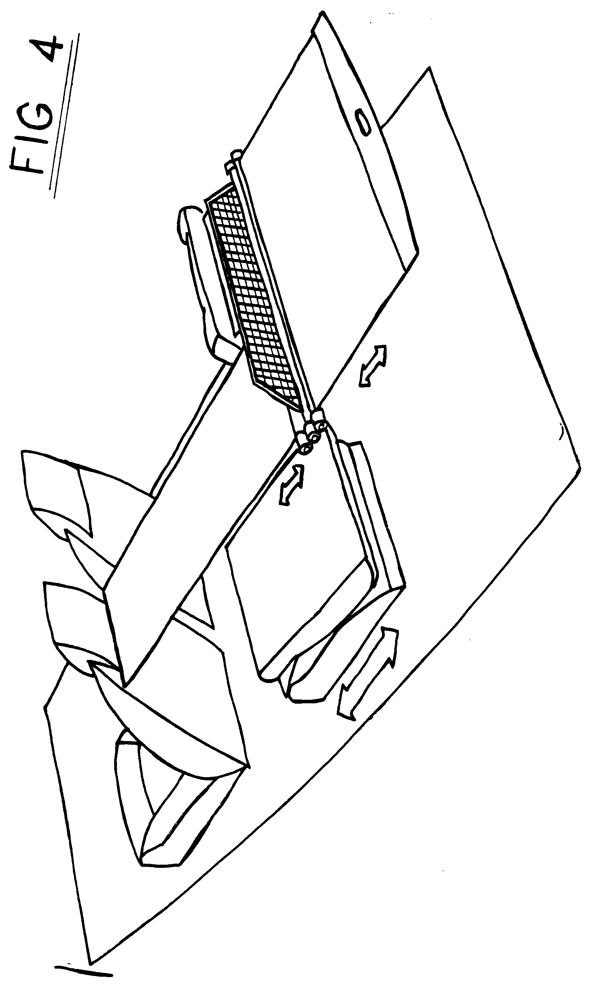

Figur 4 zeigt schließlich ein Beispiel, bei welchem ein Teil einer geteilten Rückbanklehne umgeklappt ist, so daß durch eine Teilbahn des Moduls 6 der gesamte Raum bis zum Vordersitz überbrückt werden kann.

Es versteht sich, daß die Module 4, 5, 6 wahlweise einzeln, paarweise oder in Kombination zu dritt eingesetzt werden können. Der Verbraucher kann sich die einzelnen Module entsprechend seinen Wünschen individuell zusammenstellen. Die vorliegende Erfindung bietet damit ein sehr flexibles und an unterschiedliche Gegebenheiten und Bedürfnisse anpaßbares modulares Gepäcksicherungssystem, welches leicht handhabbar, d.h. leicht anzubringen, abzunehmen, zu verändern und zu betätigen ist.

## Patentansprüche

1. Modulares Gepäcksicherungssystem für den Gepäckraum und/oder den Innenraum von Combi-Pkw mit einer rollo-artigen Gepäckraumabdeckung (4, 6) und mit seitlichen Halterungen (3) für die Aufwickelvorrichtung für die Abdeckung, dadurch gekennzeichnet, daß die Halterung (3) sich an den Seitenwänden im Bereich der Lehne des Rücksitzes des Fahrzeugs in dessen Längsrichtung erstreckt und in dieser Richtung beabstandet mehrere Befestigungspunkte (3a - 3g) aufweist.

2. Modulares Gepäcksicherungssystem nach Anspruch 1, dadurch gekennzeichnet, daß die Halterung (3) als längliche Schiene (9) ausgebildet ist.

3. Modulares Gepäcksicherungssystem nach Anspruch 1 oder 2, dadurch gekennzeichnet, daß die Halterung (3) in Längsrichtung beabstandete Raststellen aufweist.

4. Modulares Gepäcksicherungssystem nach einem der Ansprüche 1 bis 3, dadurch gekennzeichnet, daß jede Halterung aus zwei sich in Längsrichtung des Fahrzeuges erstreckenden, beabstandeten Schienen (9) besteht, zwischen weichen sich Querstege (10) erstrecken, zwischen denen die Befestigungspunkte (3a bis 3g) definiert sind.

5. Modulares Gepäcksicherungssystem nach Anspruch 4, dadurch gekennzeichnet, daß die Schienen an ihren Endabschnitten zu einem geschlossenen Rahmen verbunden sind und daß die Querstege (10) auf der zum Fahrzeuginneren hin gewandten Seite von der durch die Rahmenoberfläche gebildeten Ebene beabstandet verlaufen.

6. Modulares Gepäcksicherungssystem nach einem der Ansprüche 1 bis 3, dadurch gekennzeichnet, daß mehrere Wickelvorrichtungen (4, 5, 6) gleichzeitig an der Halterung anbringbar sind.

7. Modulares Gepäcksicherungssystem nach Anspruch 6, dadurch gekennzeichnet, daß in Fahrtrichtung vor oder anstelle der rückwärtigen Gepäckraumabdeckung eine Wickelvorrichtung (6) mit einem nach oben oder unten ausziehbaren Netz angeordnet ist.

8. Modulares Gepäcksicherungssystem nach Anspruch 7, dadurch gekennzeichnet, daß vor der rückwärtigen Gepäckraumabdeckung und gegebenenfalls auch vor einem Netz eine weitere, in Fahrtrichtung ausziehbare, rollo-artige Gepäckraumabdeckung vorgesehen ist.

9. Modulares Gepäcksicherungssystem nach Anspruch 8, dadurch gekennzeichnet, daß die nach vorn ausziehbare Gepäckraumabdeckung in zwei unabhängig ausziehbare Bahnen aufgeteilt ist.

10. Modulares Gepäcksicherungssystem nach Anspruch 9, dadurch gekennzeichnet, daß das Breitenverhältnis der Bahnen zwischen 1:1 und 2:1 liegt.

## Claims

1. Modular luggage protection system for the luggage space and/or the interior of an estate car with a roller-blind type luggage space cover (4, 6) and with lateral retainers (3) for the roller device for the cover, characterised in that the retainers (3) extend along the side walls in the area of the back rest of the rear seat of the vehicle, in the longitudinal direction of said vehicle, and are provided with a plurality of fixing points (3a - 3g) at a distance apart in this direction.

2. Modular luggage protection system according to claim 1, characterised in that the retainer (3) is configured as an elongated rail (9).

3. Modular luggage protection system according to claim 1 or 2, characterised in that the retainer (3) is provided with latching points at a distance apart in the longitudinal direction.

4. Modular luggage protection system according to one of claims 1 to 3, characterised in that each retainer is composed of two rails (9) at a distance apart, extending in the longitudinal direction of the vehicle, between which cross stays (10) extend, between which the fixing points (3a to 3g) are defined.

5. Modular luggage protection system according to claim 4, characterised in that the rails are connected by their end sections to a closed framework and that the side of the cross stays (10) facing the interior of the vehicle is at a distance from the plane formed by the surface of the framework.

6. Modular luggage protection system according to one of claims 1 to 8, characterised in that a plurality of roller devices (4, 5, 6) can be fitted at the same time to the retainer.

7. Modular luggage protection system according to claim 6, characterised in that, viewed from the direction of travel, a roller device (6) with a grill which can be pulled upwards or downwards is fitted in front of or instead of the rearward luggage space cover.

8. Modular luggage protection system according to claim 7, characterised in that in front of the rearward luggage space cover and where appropriate also in front of a grill, a further roller-blind type luggage space cover is provided which can be pulled out in the direction of travel.

9. Modular luggage protection system according to claim 8, characterised in that the luggage space cover which can be pulled forward is divided into two webs which can be pulled out independently.

10. Modular luggage protection system according to claim 9, characterised in that the ratio of the width of the webs is between 1:1 and 2:1.

## Revendications

1. Système de sécurité de bagages, modulaire, destiné à l'espace pour bagages et/ou à l'espace intérieur de voitures particulières du type break, comprenant un élément de recouvrement de l'espace pour bagages (4, 6) du genre enroulable, et des éléments de maintien latéraux (3) pour le dispositif d'enroulement destiné à l'élément de recouvrement, caractérisé en ce que l'élément de maintien (3) s'étend aux parois latérales, dans la région du dossier du siège arrière du véhicule, dans la direction longitudinale de celui-ci, et présente plusieurs points de fixation (3a à 3g) espacés dans cette direction.

2. Système de sécurité de bagages, modulaire, selon la revendication 1, caractérisé en ce que l'élément de maintien (3) est réalisé sous la forme d'un rail allongé (9).

3. Système de sécurité de bagages, modulaire, selon la revendication 1 ou 2, caractérisé en ce que l'élément de maintien (3) présente des emplacements d'encliquetage espacés dans la direction longitudinale.

4. Système de sécurité de bagages, modulaire, selon l'une des revendications 1 à 3, caractérisé en ce que chaque élément de maintien est constitué de deux rails (9) espacés et s'étendant dans la direction longitudinale du véhicule, entre lesquels s'étendent des nervures transversales (10), entre lesquelles sont définis les points de fixation (3a à 3g).

5. Système de sécurité de bagages, modulaire, selon la revendication 4, caractérisé en ce que les rails, à leurs sections d'extrémité, sont reliés en un cadre fermé, et en ce que les nervures transversales (10) s'étendent sur le côté du plan formé par la surface extérieure du cadre, dirigé vers la paroi intérieure du véhicule.

6. Système de sécurité de bagages, modulaire, selon l'une des revendications 1 à 3 caractérisé en ce que plusieurs dispositifs d'enroulement (4, 5, 6) peuvent être adjoints en même temps à l'élément de maintien.

7. Système de sécurité de bagages, modulaire, selon la revendication 6, caractérisé en ce qu'à l'avant en se référant à la direction de marche, ou bien à la place de l'élément arrière de recouvrement de l'espace pour bagages, est agencé un dispositif d'enroulement (6) comportant un filet pouvant être extrait vers le haut ou vers le bas.

8. Système de sécurité de bagages, modulaire, selon la revendication 7, caractérisé en ce que devant l'élément arrière de recouvrement d'espace pour bagages et, le cas échéant, aussi devant un filet, est prévu un autre élément de recouvrement d'espace pour bagages du genre enroulable, pouvant être extrait dans la direction de marche.

9. Système de sécurité de bagages, modulaire, selon la revendication 8, caractérisé en ce que l'élément de recouvrement d'espace pour bagages, pouvant être extrait vers l'avant, est subdivisé en deux pans pouvant être extraits indépendamment l'un de l'autre.

10. Système de sécurité de bagages, modulaire, selon la revendication 9, caractérisé en ce que le rapport des largeurs des pans se trouve entre 1:1 et 2:1.
